# NEUE EUROPÄISCHE PATENTSCHRIFT

(11) **EP 1 669 125 B2**
(45) Veröffentlichungstag und Bekanntmachung des Hinweises auf die Entscheidung über den Einspruch: **07.05.2014**
(45) Hinweis auf die Patenterteilung: 21.05.2008
(21) Anmeldenummer: 05026792.1
(22) Anmeldetag: 08.12.2005
(51) Int. Cl.: B01D 53/26, B60T 17/00

(54) **Verfahren zum Reinigen von Druckluft an Druckluftbeschaffungsanlagen von Kraftfahrzeugen sowie Kartusche hierfür**
Process for the purification of compressed air from the compressed air producing systems of a motor vehicle, and cartridge therefor
Procédé de purification d'air comprimé issu des systèmes de production d'air comprimé d'un véhicule à moteur, et cartouche pour sa mise en oeuvre

(30) Priorität: 10.12.2004 DE 102004059508
(43) Veröffentlichungstag der Anmeldung: 14.06.2006
(73) Patentinhaber: Haldex Brake Products GmbH, 69123 Heidelberg (DE)
(72) Erfinder: Heer, Siegfried, 69168 Wiesloch (DE)
(74) Vertreter: REHBERG HÜPPE + PARTNER

(56) Entgegenhaltungen:
- EP-A- 0 036 569
- WO-A-01/52973
- WO-A2-2004/103509
- DE-A1- 1 555 530
- DE-A1- 3 011 725
- US-A1- 2004 016 342
- US-B1- 6 581 297

## Beschreibung

Die Erfindung bezieht sich auf ein Verfahren zum Reinigen von Druckluft an Druckluftbeschaffungsanlagen von Kraftfahrzeugen, mit den im Oberbegriff des Anspruchs 1 angegebenen Schritten. Die Erfindung zeigt auch eine austauschbare Kartusche zum Reinigen von Druckluft an Druckluftbeschaffungsanlagen von Kraftfahrzeugen, mit den im Oberbegriff des Anspruchs 6 angegebenen Merkmalen.

Bekanntlich wird auf Kraftfahrzeugen, insbesondere Nutzfahrzeugen, Druckluft zum Steuern und Betätigen verschiedener Anlagenteile, insbesondere Ventile, Bremszylinder und dergleichen, benötigt. Diese Druckluft wird von einem Kompressor geliefert, der Umgebungsluft ansaugt, auf ein entsprechendes Druckniveau verdichtet, so dass die komprimierte Druckluft auf verschiedene Leitungen und Behälter von einzelnen Kreisen aufgeteilt und dort gespeichert wird. Bekanntlich werden auf diese Art und Weise als die wichtigsten Kreise zwei Betriebsbremskreise geschaffen. Der abwechselnd in Lastlaufphase sowie in Leerlaufphase betriebene Kompressor liefert an eine Druckluftaufbereitungseinrichtung Druckluft, die insbesondere mit Öl, Verkokungsrückständen, Verschleißpartikeln und dgl. belastet ist. Zudem enthält die angesaugte Druckluft auch immer Feuchtigkeit, die auf diese Weise in die Anlage gelangt. Die Verunreinigungen in der Druckluft führen zu einer Beeinträchtigung der Zuverlässigkeit der nachgeschalteten Elemente, insbesondere Ventile. Sie können bei engen Strömungsquerschnitten an Ventilen und anderen singulären Anlagenteilen zu einem Zusetzen führen. Die miteingeschleppte Feuchtigkeit kann insbesondere während der kalten Jahreszeit kondensieren und einfrieren und auf diese Weise die Funktionsfähigkeit nachgeschalteter Elemente beeinträchtigen.

### STAND DER TECHNIK

Ein Verfahren der eingangs beschriebenen Art ist aus der PCT-Anmeldung mit der Veröffentlichungsnummer WO 01/26783 bekannt. Die von einem Kompressor herangeführte und insbesondere mit Öl und Wasser beladene Druckluft wird dadurch gereinigt, dass sie zunächst durch ein Vorfilter, dann durch eine Schicht Silikagel, weiter durch ein Molekularsieb und schließlich durch einen Feinfilter geführt wird. Der Vorfilter hat die Aufgabe, größere feste Partikel, Wasserpartikel sowie Flüssigkeiten und Substanzen aufzufangen und an dem weiteren Durchtritt zu hindern. Dieses Vorfilter besitzt eine gute Wirkung bezüglich größerer Partikel, beispielsweise größer als 5 µm, hat andererseits eine geringere Wirkung für kleinere Partikel. In einem zweiten Raum einer Abscheidezone ist grobporiges Silikagel und feinporiges Silikagel hintereinander angeordnet. Das grobporige Silikagel hat die Aufgabe, längere Kohlenstoffverbindungen und andere chemische Komponenten abzufangen. Es dient auch zur Aufnahme von Wasser in flüssiger Form. Das feinporige Silikagel nimmt kleinere Kohlenstoffverbindungen und Wasser in Dampfform auf. Diese beiden Arten von Silikagel sind in einem gemeinsamen Abscheideraum angeordnet, wobei die Durchflussrichtung der zu reinigenden Druckluft entgegen der Schwerkraftrichtung gerichtet ist. Es schließt sich ein weiterer Abscheideraum an, in welchem ein Molekularsieb angeordnet ist. Schließlich gelangt die Druckluft noch über einen Feinfilter, der geeignet ist, kleinere Partikel aufzunehmen und abzuscheiden. Die Vielzahl der in einer Abscheidezone zusammengefassten Abscheideräume mit den einzelnen Behandlungsmitteln sind hintereinander geschaltet in einer Kartusche untergebracht, die austauschbar mit einem Basisteil verbindbar ist. Trotz der Anordnung der Mehrzahl von einzelnen Behandlungsschichten ist die Abscheidewirkung für Öl-Nebel nicht optimal. Solche Öl-Nebel beeinträchtigen die zuverlässige Wirkung nachgeschalteter Ventile in der Anlage.

Aus der PCT-Anmeldung mit der Veröffentlichungsnummer WO 01/52973 A1 ist eine austauschbare Kartusche zum Reinigen von Druckluft in Druckluftbeschaffungsanlagen von Kraftfahrzeugen bekannt. Die Kartusche weist ein Gehäuse auf, in welchem ein mit einem Behandlungsmittel gefüllter Abscheideraum vorgesehen ist. Das Behandlungsmittel dient im Wesentlichen dazu, Feuchtigkeit aus der zu reinigenden Luft aufzunehmen. Eingangsseitig zu dem mit Behandlungsmittel gefüllten Abscheideraum ist ein Koaleszenzfilter vorgesehen, der aus geschichteten Fasern oder einer Fasermatte bestehen kann und die Aufgabe hat, Öldämpfe aus dem herangeführten Luftstrom aufzunehmen, um so dass nachgeschaltete Behandlungsmittel vor einem Kontakt mit solchen Öldämpfen zu schützen. Der Koaleszenzfilter ist konisch gestaltet und angeordnet, so dass sich das abgeschiedene Öl am radial äußeren Umfang des Koaleszenzfilters sammelt. Während der Regeneration hebt der Koaleszenzfilter von seinem Sitz ab, so dass das aufgesammelte Öl von dem Regenerationsluftstrom hinwegbefördert wird.

Aus der US 2004/0016342 A1 ist eine austauschbare Kartusche zum Reinigen von Druckluft in Druckluftbeschaffungsanlagen von Kraftfahrzeugen bekannt. Auch hier ist ein mit Behandlungsmittel gefüllter Abscheideraum innerhalb eines Gehäuses vorgesehen, der die Aufgabe hat, Feuchtigkeit von der zu reinigenden Druckluft aufzunehmen. Eingangsseitig zu dem Abscheideraum ist auch hier ein Koaleszenzfilter angeordnet, der aus Glasfaser oder ähnlichem Material besteht und die Aufgabe hat, Öl oder Ölnebel abzuscheiden und damit von dem nachfolgenden Behandlungsmittel fernzuhalten. Der Koaleszenzfilter ist ausgangsseitig von einem saugenden Material umgeben, welches die Aufgabe hat, abgeschiedene Öltropfen in einen Sammelraum zu überführen. Der Koaleszenzfilter ist von einer Umgehungsleitung überbrückt, in der ein bei Regeneration öffnendes Rückschlagventil eingeschaltet ist. Auch hier wird die vom Kompressor herangeführte zu reinigende Druckluft zuerst dem Koaleszenzfilter zugeleitet, wodurch die Gefahr besteht, dass dieses Koaleszenzfilter sich zusetzt und an Wirksamkeit verliert.

Auch bei dem Lufttrockner nach der PCT-Anmeldung mit der Veröffentlichungsnummer WO 94/26569 ist der Abscheidezone mit dem Behandlungsmittel für die Aufnahme der Feuchtigkeit ein Ölfilter vorgeschaltet, der die Aufgabe hat, Öl abzuscheiden. Das sich sammelnde Öl wird allerdings zwangsweise in den Abscheideraum überführt und kann erst bei einer Regeneration durch eine den Abscheideraum mit dem Eingang verbindende und den Ölfilter überbrückende Umgehungsleitung abgeführt werden.

Die US 5,002,593 zeigt einen Luftfilter mit einem mit einem Trockenmittel gefüllten Abscheideraum, dem eingangsseitig ein Ölabscheider und ein Ölfilter vorgeschaltet sind.

All diesen bekannten Konstruktionen von Luftfiltern ist gemeinsam, dass der Koaleszenzfilter eingangsseitig am Lufttrockner vorgesehen ist und die Aufgabe hat, die vom Kompressor herangeführte zu reinigende Druckluft zunächst von Öl zu befreien, damit die Wirkung des mit Trockenmittel gefüllten nachgeschalteten Abscheideraums für Feuchtigkeit nicht nachteilig beeinträchtigt wird. Die unmittelbare Einleitung des vom Kompressor herangeführten Druckluftstroms in den Koaleszenzfilter führt jedoch zu einer vergleichsweise großen Belastung desselben. Es besteht die Gefahr, dass der Koaleszenzfilter durch Wassertropfen, Öltropfen, Kokspartikel und ähnliche größere klumpenförmige Gebilde zugesetzt wird und damit relativ rasch seine Wirkung einbüßt. Dann ist auch der angestrebte Schutz des nachgeschalteten Abscheideraums mit dem Trockenmittel nicht mehr gewährleistet.

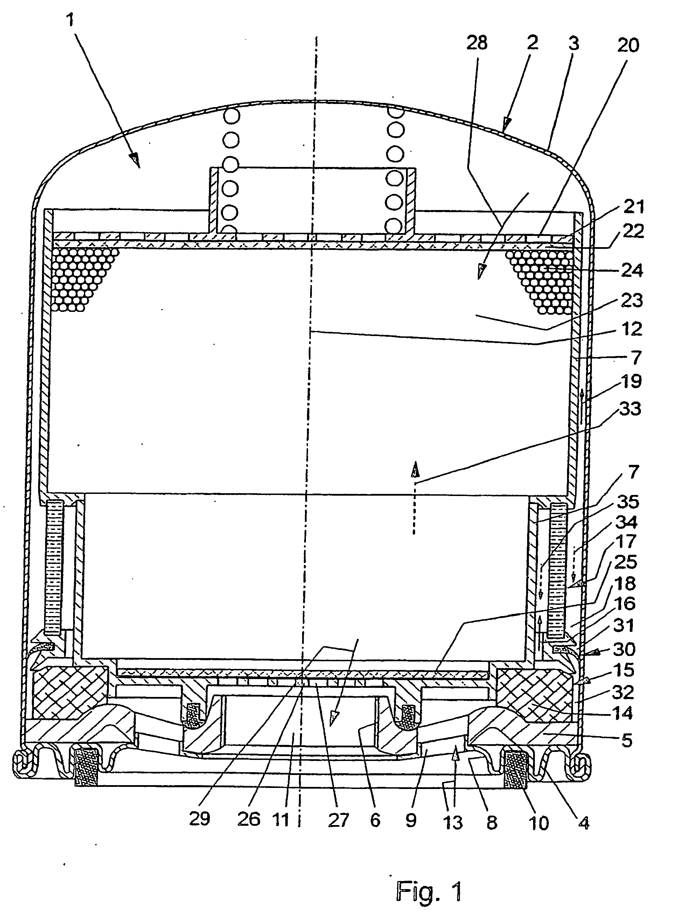

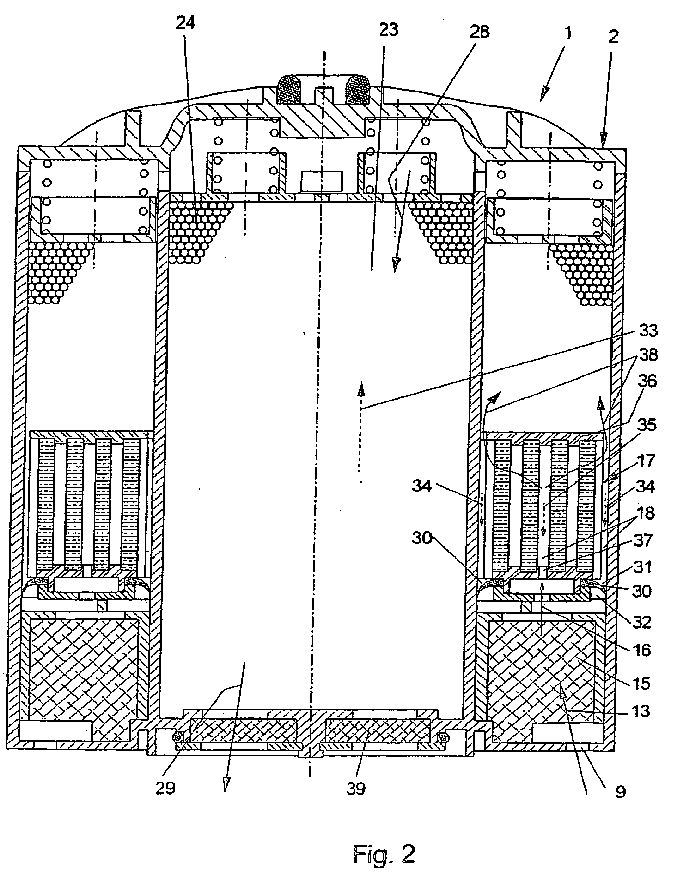

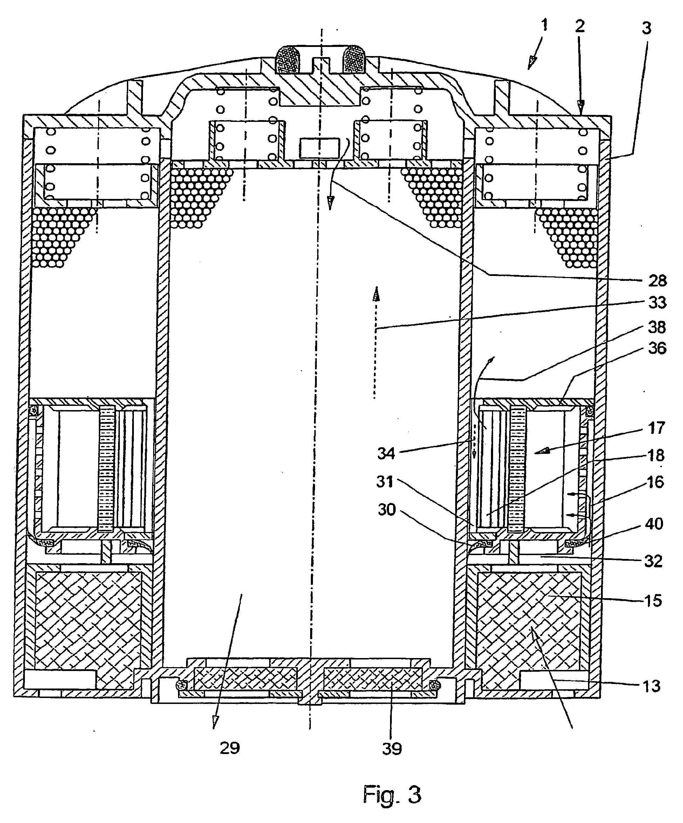

Die DE 103 29 401 A1 zeigt als Stand der Technik gemäß Fig. 3 einen Lufttrockner, bei dem einem Trockenmittel gefüllten Trockeneinsatz ein als Vliesfilter bezeichneter Filter vorgeschaltet ist. Es wird es als problematisch angesehen, dass das Vliesfilter mit der Zeit verschmutzt, was eine Herabsetzung der Filterwirkung bewirkt und ein Auswechseln des Filters erforderlich macht. Demgemäß wird ein Lufttrockner gezeigt, bei dem gemäß Fig. 1 eingangsseitig vor einem Trockeneinsatz lediglich ein Koaleszenzfilter angeordnet ist und damit auf einen Vliesfilter verzichtet wird. Die mit festen und flüssigen Verunreinigungen beladene Druckluft wird eingangsseitig direkt in den Koaleszenzfilter geführt. Dies geschieht über einen Bereich vor dem Koaleszenzfilter, der keinerlei Filtermaterial enthält. Lediglich bei der Ausführungsform der Fig. 2 ist ein geringer Teil dieses Bereiches vor dem Koaleszenzfilter mit einem Vliesfilter versehen, der den Koaleszenzfilter auf der einen Seite abdeckt und nur eine geringe Dicke aufweist, durch die die Strömung hindurchgeführt wird. Unterhalb dieses Pakets aus Vliesfilter und Koaleszenzfilter ist ein Rückschlagventil angebracht. Dieses Rückschlagventil ist so gestaltet und eingebaut, dass die verschmutzte Druckluft gezwungen wird, zunächst durch den Vliesfilter und dann durch den Koaleszenzfilter zu strömen. Bei Regeneration ergibt sich die Möglichkeit, den Vliesfilter zu überbrücken, so dass die im Vliesfilter befindlichen Verunreinigungen nicht abgeführt werden. Es gibt also keine Zwangsdurchströmung und damit keine Zwangsreinigung dieses Vliesfilters während der Regenerationsphase.

Die US 6,581,297 B1 offenbart eine komplexe Baugruppe mit zwei auswechselbaren Kartuschen, die wechselseitig betrieben und regeneriert werden können. Die Baugruppe besitzt ein elektrisches Steuermodul sowie ein Ventilmodul mit mehreren Ventilen, die über das Steuermodul geeignet beaufschlagt werden können. Kontaminierte Luft wird über einen Einlass vertikal nach unten über perforierte Scheiben geführt, die einen Vorfilter darstellen. Anschließend wird der Luftstrom vertikal nach oben umgelenkt, um durch einen weiteren Vorfilter geführt zu werden. Die derart vorgefilterte Druckluft gelangt dann in die Ventilbaugruppe, wo diese intermittierend auf zwei Teilluftströme für die unterschiedlichen Kartuschen aufgeteilt wird. Anschließend gelangt die Druckluft in jedem Teilluftstrom zu einem zugeordneten Koaleszenzfilter, von dem die Druckluft der auswechselbaren Kartusche zugeführt wird. Gemäß US 6,581,297 B1 ist lediglich die Kartusche auf einfache Weise auswechselbar, jedoch nicht die genannten stromaufwärtigen durchströmten Bauelemente, insbesondere die Vorfilter und der Koaleszenzfilter, die in einem geschlossenen, soliden Gehäuse angeordnet sind.

WO-A-2004/103 509 offenbart eine Kartusche und ein Verfahren zur Reinigung von Druckluft. Die Kartusche weist einen Koaleszenzfilter und einen mit einem Behandlungsmittel (Trocknungsmittel) gefüllten Abscheideraum auf. Im Regenerationsbetrieb wird trockene Luft im Umkehrstrom durch das Behandlungsmittel und ein Teilstrom durch den Koaleszenzfilter geleitet.

### AUFGABE DER ERFINDUNG

Der Erfindung liegt die Aufgabe zugrunde, ein Verfahren der eingangs beschriebenen Art sowie eine zur Durchführung des Verfahrens geeignete austauschbare Kartusche zu schaffen, mit denen der Weitertransport von insbesondere feinen Öl-Nebeln in die Anlage und zu den dort angeordneten Ventilen und sonstigen Elementen über eine verlängerte Gebrauchsdauer reduziert werden kann.

### LÖSUNG

Erfindungsgemäß wird dies durch die Merkmale der unabhängigen Ansprüche 1 und 4 erreicht.

### BESCHREIBUNG DER ERFINDUNG

Für das erfindungsgemäße Verfahren ist es von Bedeutung, dass die zu reinigende Druckluft zunächst durch einen Vorfilter geführt und erst anschließend durch einen Koaleszenzfilter und dann schließlich durch den mit Behandlungsmittel gefüllten Abscheideraum geleitet wird. Der Vorfilter dient zum Fangen und Abscheiden von größeren Partikeln und klumpenförmigen Einheiten, insbesondere Wassertropfen, Öltropfen, Kokspartikel. Es handelt sich dabei insbesondere um solche Gebilde, die für die Wirkung eines Koaleszenzfilters schädlich sind und zu einem beschleunigten Zusetzen eines solchen Sammelfilters führen würden. Im Stand der Technik werden die Koaleszenzfilter immer eingangsseitig angeordnet. Die vorliegende Erfindung wendet sich von dieser Entwicklungsrichtung ab und nutzt das dem Koaleszenzfilter vorgeschaltete Vorfilter dazu, dem Koaleszenzfilter nur noch feinere Partikel, insbesondere in Form von Ölnebel, Wassernebel und dergleichen, zuzuführen. Bezüglich dieser Feinpartikel kann der Koaleszenzfilter seine Wirkung über eine längere Gebrauchsdauer entfalten, so dass letztendlich auch die Gebrauchsdauer der Kartusche verlängert ist. Die Wirkung des Koaleszenzfilters ist auch für den mit Behandlungsmittel gefüllten Abscheideraum bedeutsam. Hier wird im Wesentlichen Feuchtigkeit abgeschieden, so dass auch diese dritte Stufe ihre volle Wirkung entfalten kann.

Bei der Regeneration werden die nach dem Koaleszenzfilter aufgesammelten und abgeschiedenen gebildeten größeren Partikel unter zumindest teilweiser Umgehung des Koaleszenzfilters mit einem Regenerationsluftstrom in die Atmosphäre überführt. Die vom Koaleszenzfilter zu größeren Partikeln aufgesammelten Stoffe werden also nicht durch den Koaleszenzfilter in umgekehrter Richtung hindurchgedrückt, sondern gleichsam über einen Bypass an diesem vorbeigeleitet, damit der Koaleszenzfilter während der Regeneration nicht verstopfen kann. Der Regenerationsluftstrom wird auch zur Reinigung des Vorfilters eingesetzt, wobei der Vorfilter nicht umgangen, sondern rückwärts durchströmt wird, so dass sich auch die in ihm aufgesammelten und abgeschiedenen größeren Partikel lösen und in die Atmosphäre überführt werden.

Sinnvoll ist es, wenn der Koaleszenzfilter mit einer geringeren Geschwindigkeit als der Vorfilter durchströmt wird. Meist genügt es, wenn die Umgehungsleitung den Koaleszenzfilter überbrückt und ein Teil des Regenerationsluftstroms auch den Vorfilter überbrückt, während ein anderer Teil durch den Vorfilter geleitet wird.

Die austauschbare Kartusche zum Reinigen von Druckluft in Druckluftbeschaffungsanlagen von Kraftfahrzeugen kennzeichnet sich erfindungsgemäß dadurch, dass zwischen dem Vorfilter und dem mit Behandlungsmittel gefüllten Abscheideraum ein Koaleszenzfilter angeordnet ist, und dass eine den Koaleszenzfilter überbrückende Umgehungsleitung vorgesehen ist, und dass in der Umgehungsleitung ein bei Regeneration öffnendes Rückschlagventil vorgesehen ist.

Der Koaleszenzfilter wird also nicht mehr eingangsseitig, wie im Stand der Technik vorgeschlagen, eingesetzt, sondern erst an zweiter oder jedenfalls an nachgeordneter Stelle, nämlich dem Vorfilter nachgeordnet. Der Vorfilter wird so ausgebildet, dass er beanspruchungsgerecht zum Fangen und Abscheiden von größeren Partikeln gestaltet werden kann, was wiederum den Vorteil hat, dass der nachgeschaltete Koaleszenzfilter nur von feineren Partikeln beaufschlagt wird. Damit kann auch der Koaleszenzfilter beanspruchungsgerechter ausgebildet werden, so dass die Gefahr des Zusetzens nicht mehr gegeben ist und sich eine Langzeitfunktion einstellt. Dies ist insbesondere dann der Fall, wenn während der Regeneration der Koaleszenzfilter nicht mehr mit den aufgesammelten und zusammengefügten Partikeln durchströmt wird.

Um die Wirkung des Koaleszenzfilters zu verbessern, kann dieser im Gehäuse im Wesentlichen vertikal angeordnet sein. Er weist auf seiner Ausgangsseite einen Sammelraum für abzuscheidende größere Partikel auf. Der Sammelraum ist an die Umgehungsleitung angeschlossen, die während der Regeneration von einem Regenerationsluftstrom durchströmt wird, während in der Lastlaufphase in der Umgehungsleitung keine Strömung stattfindet.

Der Koaleszenzfilter kann in einem Einsatz untergebracht sein, was die Einbringung und Montage der austauschbaren Kartusche mit ihren Einzelheiten vereinfacht.

Im Bereich des Koaleszenzfilters bzw. der Umgehungsleitung kann neben dem Rückschlagventil auch ein weiteres Rückschlagventil angeordnet sein. Das weitere Rückschlagventil ist mit umgekehrter Öffnungsrichtung angeordnet und verhindert eine Teildurchströmung des Koaleszenzfilters bei der Regeneration.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ausführungsform einer Kartusche in Ansicht und Halbschnitt.
- **Fig. 2**: zeigt eine zweite Ausführungsform einer Kartusche im Schnitt.
- **Fig. 3**: zeigt eine dritte Ausführungsform einer Kartusche im Schnitt.
- **Fig. 4**: zeigt eine vierte Ausführungsform einer Kartusche im Schnitt.

### FIGURENBESCHREIBUNG

**Fig. 1** zeigt eine Kartusche 1, die als austauschbares Teil mit einem nicht dargestellten Basisteil zusammengefügt wird. Die Kartusche 1 weist ein Gehäuse 2 auf, welches aus mehreren Elementen zusammengesetzt ist. Das Gehäuse 2 besitzt ein aus mehreren Blechteilen 3, 4 durch Rollen verbundenes Außengehäuse, in dem ein Anschlussdeckel 5 mit Schraubanschluss 6 untergebracht ist. In dem Gehäuse 2 ist eine gestuft ausgebildete Innenwandung 7 untergebracht. Im unteren Bereich schließt eine Stirnwand 8 mit einer Durchbrechung 9 den Anschlussdeckel 5 ein. Die Stirnwand 8 trägt eine Dichtung 10, die sich beim Aufschrauben der Kartusche 1 über den Schraubanschluss 6 an das Basisteil legt. Die Durchbrechungen 9 in dem Anschlussdeckel 5 sind über den Umfang verteilt angeordnet. Der Schraubanschluss 6 schließt eine Durchbrechung 11 ein. Die Kartusche 1 ist im Wesentlichen rotationssymmetrisch zu einer Mittelachse 12 ausgebildet. Die Einströmung der zu reinigenden Druckluft, die von einem Kompressor (nicht dargestellt) herangeführt wird, erfolgt gemäß Pfeil 13 durch die Durchbrechungen 9 im Blechteil 4 sowie im Anschlussdeckel 5 hindurch. Die Druckluft durchströmt zunächst einen ersten Abscheideraum 14, in welchem ein Vorfilter 15 angeordnet ist. Der Vorfilter 15 kann als Gewebefilter ausgebildet sein. Der Vorfilter 15 weist kreisringförmige Gestalt auf. Der Vorfilter 15 dient zum Abscheiden größerer Partikel an Ölkohle, Öl, Wassertropfen und dergleichen. Die Druckluft strömt dann gemäß Pfeil 16 zu einem Koaleszenzfilter 17, der eine kreisringförmige Gestalt aufweist und im Wesentlichen vertikal ausgerichtet angeordnet ist. Zur Aufnahme des Koaleszenzfilters 17 ist die Innenwandung 7 der Kartusche 1 in der gezeigten Weise gestuft ausgebildet. Der Koaleszenzfilter 17 hat die Eigenschaft, feinere Partikel zu größeren Einheiten zusammenzufügen, die dann ein- oder ausgangsseitig in einem Sammelraum 18 abgeschieden werden. Der Sammelraum 18 befindet sich hier außen an dem Koaleszenzfilter 17 zwischen diesem und dem Blechteil 3. Die zusammengefügten kleineren Partikel gelangen unter Schwerkrafteinwirkung in den Sammelraum 18. Die Druckluft strömt dann gemäß Pfeil 19 durch einen verhältnismäßig engen Ringspalt zwischen dem Blechteil 3 und der Innenwandung 7 aufwärts, kehrt ihre Strömungsrichtung um und gelangt über Durchbrechungen 20 in einem Deckelteil 21 und durch eine Feinfiltermatte 22 in einen Abscheideraum 23, der mit einem angedeuteten Behandlungsmittel 24 gefüllt ist. Das Behandlungsmittel 24 kann Silikagel sein, welches grobporig und/oder feinporig ausgebildet sein kann und den gesamten Abscheideraum 23 bis zu einer unteren Feinfiltermatte 25 ausfüllt. Der Abscheideraum 23 bzw. die durch ihn gebildete Abscheidezone wird unten durch eine Stirnwandung 26 mit Durchbrechungen 27 abgeschlossen. Die Durchbrechungen 27 haben Verbindung zu der Durchbrechung 11, die von dem Schraubanschluss 6 umgeben ist. Auf diese Weise wird die Abscheidezone gemäß den Pfeilen 28 und 29 durchströmt.

Dem Koaleszenzfilter 17 ist ein Rückschlagventil 30 zugeordnet, welches in einer Umgehungsleitung 31 angeordnet ist. Die Umgehungsleitung 31 überbrückt den Koaleszenzfilter 17 außen und schließt den Sammelraum 18 an einen Zwischenraum 32 an, der ausgangsseitig zu dem Vorfilter 15 vorgesehen ist. Aufgabe des Rückschlagventils 30, welches als Manschette ausgebildet sein kann, ist es, während der Lastlaufphase die Druckluft, die den Vorfilter 15 passiert hat, in eindeutiger Weise gemäß Pfeil 16 durch den Koaleszenzfilter 17 zu führen und insoweit eine Ablagerung zusammengefügter feiner abgeschiedener Partikel im Sammelraum 18 zu ermöglichen.

Während der Regeneration strömt Druckluft in umgekehrter Richtung durch die Durchbrechung 11 und durch die Abscheidezone entgegen der Schwerkrafteinwirkungsrichtung aufwärts. Dies ist durch einen gestrichelt dargestellten Pfeil 33 verdeutlicht. Diese Strömung strömt dann auch entgegengesetzt zu der Richtung des Pfeils 19 in den Ringspalt zwischen das Blechteil 3 und der Innenwandung 7 abwärts und teilt sich am Koaleszenzfilter 17 auf. Ein Teil des Regenerationsluftstroms strömt außen an dem Koaleszenzfilter 17 gemäß Pfeil 34 abwärts durch den Sammelraum 18 und führt die dort aufgesammelten Partikel über das sich öffnende Rückschlagventil 33 in den Zwischenraum 32 über. Ein anderer Teil des Regenerationsluftstroms durchdringt das Koaleszenzfilter 17 in umgekehrter Richtung und strömt dann gemäß Pfeil 35 innen am Koaleszenzfilter 17 abwärts, bis sich dieser Anteil der Strömung mit dem anderen Anteil in dem Zwischenraum 32 vereinigen. Der somit wiederum vereinigte Regenerationsluftstrom drückt die vom Koaleszenzfilter 17 abgeschiedenen Partikel rückwärts durch den Vorfilter 15 und durch die Durchbrechungen 9 letztlich in die Atmosphäre. Dies geschieht in umgekehrter Richtung des Pfeils 13.

Der Koaleszenzfilter 17 besitzt eine größere Höhe als der Vorfilter 15. Die Geschwindigkeit, mit der der Koaleszenzfilter 17 durchströmt wird, ist also geringer als die Geschwindigkeit, mit der der Vorfilter 15 durchströmt wird. Dies gilt sowohl während der Lastlaufphase wie auch der Regenerationsphase.

**Fig. 2** zeigt eine zweite Ausführungsform der Kartusche 1, bei der das Gehäuse 2 aus verschiedenen Teilen in der dargestellten Weise zusammengesetzt ist. Im unteren Bereich ist auch hier ein Vorfilter 15 angeordnet, welcher gemäß Pfeil 13 durch Durchbrechungen 9 durchströmt wird. Der dem Vorfilter 15 nachgeschaltete Koaleszenzfilter 17 ist in einem Einsatz 36 untergebracht, der als kreisringförmiger Körper ausgebildet ist und in welchem der Koaleszenzfilter 17, bestehend aus vier Kreisringelementen, untergebracht ist. In der Lastlaufphase gelangt die Druckluft gemäß Pfeil 16 nach Durchströmen des Vorfilters 15 durch eine Durchbrechung 37 in das Innere des Koaleszenzfilters 17. Ein Teil der Strömung richtet sich radial nach innen und durchströmt zwei Ringe des Koaleszenzfilters 17, während ein anderer Teil radial nach außen strömt und ebenfalls zwei Ringe des Koaleszenzfilters 17 durchströmt. Es werden hier außen und innen je ein Sammelraum 18 gebildet. Auch die Umgehungsleitungen 31 und die Rückschlagventile 30 sind hier doppelt ausgebildet und angeordnet. Die Durchströmung der Ringe des Koaleszenzfilters 17 in der Lastlaufphase geschieht gemäß den Pfeilen 38. Auch hier wird die mit Behandlungsmittel 24 gefüllte Abscheideraum 23 für die Feuchtigkeit in Schwerkrafteinwirkungsrichtung gemäß den Pfeilen 28 und 29 durchströmt. Am unteren Ende der Abscheidezone ist hier ein Feinfilter 39 untergebracht.

In der Regenerationsphase fließt der Regenerationsluftstrom auch hier vergleichsweise umgekehrt, und zwar zunächst gemäß Pfeil 33 aufwärts durch die Abscheidezone, so dass hier die dort abgeschiedene Feuchtigkeit mitgenommen wird. Am Einsatz 36 des Koaleszenzfilters 17 teilt sich die Strömung wiederum auf. Ein Teil der Strömung fließt außen und innen gemäß den Pfeilen 34 durch die Umgehungsleitungen 31, wobei die in den Sammelräumen 18 abgeschiedenen Partikel nicht mehr durch die Abscheideringe des Koaleszenzfilters 17 geführt werden, sondern unmittelbar über die sich öffnenden Rückschlagventile 30 in den Zwischenraum 32 gelangen, so dass sie durch den Vorfilter 15 hindurch in die Atmosphäre abgeführt werden. Ein anderer Teil des Regenerationsluftstroms durchströmt mit vergleichsweise sehr niedriger Geschwindigkeit den Koaleszenzfilter 17 rückwärts und gelangt gemäß Pfeil 35 durch die Durchbrechung 37 ebenfalls in den Zwischenraum 32.

In **Fig. 3** ist schließlich eine dritte Ausführungsform der Kartusche 1 verdeutlicht. Sie schließt weitgehend an die Ausbildung der Fig. 2 an. Lediglich der Einsatz 36 des Koaleszenzfilters 17 ist hier etwas anders gestaltet. Der Einsatz 36 trägt neben dem Rückschlagventil 30 ein weiteres Rückschlagventil 40, welches in umgekehrter Strömungsrichtung zum Rückschlagventil 30 öffnet, so dass hier in der Lastlaufphase eine eindeutige Außenanströmung des Koaleszenzfilters 17 erreicht wird, dessen Abscheidering von außen nach innen durchströmt wird. Der Abscheidering ist sternförmig ausgebildet, um die Fläche zu vergrößern. Demzufolge ist der Sammelraum 18 hier innerhalb des Abscheiderings des Koaleszenzfilters 17 gebildet. Das weitere Rückschlagventil 40 verhindert, dass der Koaleszenzfilter 17 während der Regenerationsphase durchströmt wird. Die gesamte Regenerationsluftmenge wird von dem Koaleszenzfilter 17 ferngehalten und strömt ausschließlich durch die Umgehungsleitung 31, die den Sammelraum 18 über das sich öffnende Rückschlagventil 30 mit dem Zwischenraum 32 verbindet.

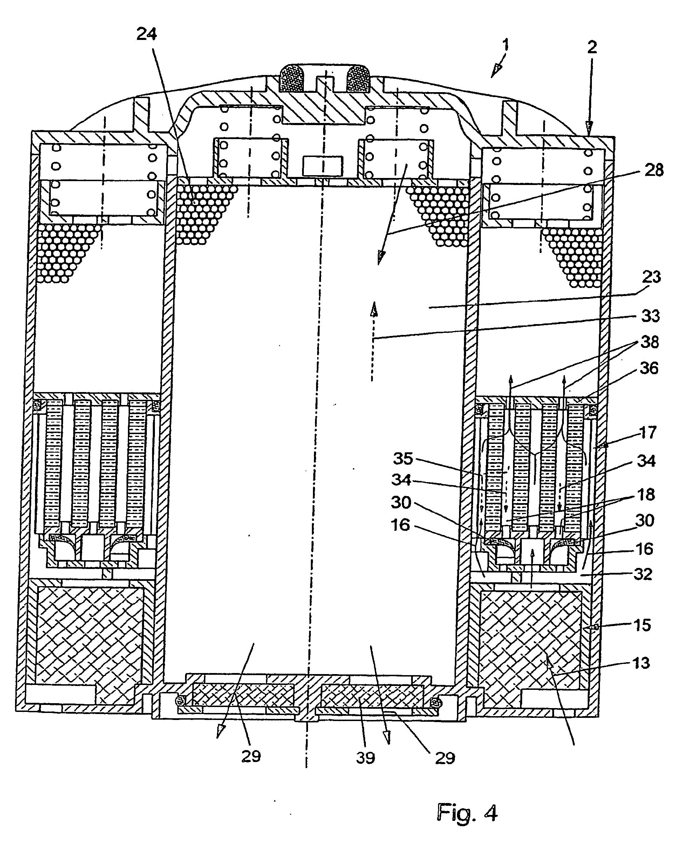

Die Ausführungsform der Kartusche 1 gemäß **Fig. 4** schließt an die vorangehenden Ausführungsformen an. Es sind hier an dem Koaleszenzfilter 17 vier Filterringe parallel geschaltet. Auch hier sind die Filterringe vertikal ausgerichtet in dem Einsatz 36 angeordnet. Der Einsatz 36 ist in der dargestellten Weise mit Durchbrechungen versehen und mit zwei Rückschlagventilen 30 ausgestattet. Den beiden Rückschlagventilen 30 ist je ein Sammelraum 18 zugeordnet.

In der Lastlaufphase durchströmt die zu reinigende Druckluft gemäß Pfeil 13 den Vorfilter 15. Vor dem Koaleszenzfilter 17 teilt sich die Strömung im Zwischenraum 32 in vier Strömungspfade auf, die sich gemäß den Pfeilen 38 nach dem Koaleszenzfilter 17 wieder vereinigen.

Während der Regeneration verläuft die Durchströmung in der umgekehrten Richtung. Die Abscheidezone wird gemäß Pfeil 33 durchströmt. Im Koaleszenzfilter 17 erfolgt eine Aufteilung der Strömung, wobei die in den beiden Abscheideräumen 18 abgeschiedenen Partikel von einem Teil des Regenerationsluftstroms gemäß Pfeil 34 in den Zwischenraum 32 überführt werden, während ein anderer Teil gemäß Pfeil 35 den jeweiligen Ring des Koaleszenzfilters 17 durchströmt.

### BEZUGSZEICHENLISTE

- 1: Kartusche
- 2: Gehäuse
- 3: Blechteil
- 4: Blechteil
- 5: Anschlussdeckel
- 6: Schraubanschluss
- 7: Innenwandung
- 8: Stirnwand
- 9: Durchbrechung
- 10: Dichtung
- 11: Durchbrechung
- 12: Mittelachse
- 13: Pfeil
- 14: Abscheideraum
- 15: Vorfilter
- 16: Pfeil
- 17: Koaleszenzfilter
- 18: Sammelraum
- 19: Pfeil
- 20: Durchbrechung
- 21: Deckelteil
- 22: Feinfiltermatte
- 23: Abscheideraum
- 24: Behandlungsmittel
- 25: Feinfiltermatte
- 26: Stirnwandung
- 27: Durchbrechung
- 28: Pfeil
- 29: Pfeil
- 30: Rückschlagventil
- 31: Umgehungsleitung
- 32: Zwischenraum
- 33: Pfeil
- 34: Pfeil
- 35: Pfeil
- 36: Einsatz
- 37: Durchbrechung
- 38: Pfeil
- 39: Feinfilter
- 40: weiteres Rückschlagventil
- 41: Trennwand
- 42: Spalt

## Patentansprüche

1. Verfahren zum Reinigen von Druckluft in Druckluftbeschaffungsanlagen von Kraftfahrzeugen in einer auswechselbaren Kartusche, indem die von einem Kompressor herangeführte und insbesondere mit ÖI und Wasser beladene Druckluft in der auswechselbaren Kartusche zunächst durch einen Vorfilter (15) geführt und dabei größere Partikel und Wasser abgeschieden werden und durch einen mit mindestens einem Behandlungsmittel (24) gefüllten Abscheideraum (23) für Feuchtigkeit geführt wird, **dadurch gekennzeichnet, dass** die vom Kompressor herangeführte und in der Kartusche durch den Vorfilter (15) geführte Druckluft in der Kartusche durch einen Koaleszenzfilter (17) geführt und dabei zumindest Öl zu größeren Partikeln aufgesammelt und nach dem Koaleszenzfilter (17) abgeschieden wird, bevor die Druckluft durch den mit dem Behandlungsmittel (24) gefüllten Abscheideraum (23) der Kartusche geführt wird, während bei Regeneration die nach dem Koaleszenzfilter (17) aufgesammelten und abgeschiedenen größeren Partikel unter zumindest teilweiser Umgehung des Koaleszenzfilters (17) und die im Vorfilter (15) abgeschiedenen größeren Partikel mit einem Regenerationsluftstrom in die Atmosphäre überführt werden und die bei Regeneration nach dem Koaleszenzfilter (17) aufgesammelten und abgeschiedenen größeren Partikel mit dem Regenerationsluftstrom durch den Vorfilter (15) in die Atmosphäre überführt werden.

2. Verfahren nach Anspruch 1, **dadurch gekennzeichnet, dass** der Koaleszenzfilter (17) mit einer geringeren Geschwindigkeit als der Vorfilter (15) durchströmt wird.

3. Verfahren nach einem der Ansprüche 1 bis 2, **dadurch gekennzeichnet, dass** der Regenerationsluftstrom und die nach dem Koaleszenzfilter (17) aufgesammelten und abgeschiedenen größeren Partikel dem Vorfilter (15) zumindest teilweise über ein zum Koaleszenzfilter parallel geschaltetes Rückschlagventil (30) zugeführt werden.

4. Austauschbare Kartusche (1) zum Reinigen von Druckluft in Druckluftbeschaffungsanlagen von Kraftfahrzeugen, mit einem einen Schraubanschluss (6) und mindestens eine Dichtung (10) aufweisenden Gehäuse (2), in dem ein Vorfilter (15) und in Durchströmrichtung nachgeordnet ein mit einem Behandlungsmittel (24) gefüllter Abscheideraum (23) vorgesehen ist, **dadurch gekennzeichnet, dass** zwischen dem Vorfilter (15) und dem mit Behandlungsmittel (24) gefüllten Abscheideraum (23) ein Koaleszenzfilter (17) angeordnet ist, und dass eine zumindest teilweise den Koaleszenzfilter (17), nicht aber den Vorfilter (15) überbrückende Umgehungsleitung (31) vorgesehen ist, und dass in der Umgehungsleitung (31) ein bei Regeneration öffnendes Rückschlagventil (30) vorgesehen ist.

5. Kartusche nach Anspruch 4, **dadurch gekennzeichnet, dass** der Koaleszenzfilter (17) im Gehäuse (2) im Wesentlichen vertikal angeordnet ist und ausgangsseitig einen Sammelraum (18) für abzuscheidende größere Partikel aufweist, der an die Umgehungsleitung (31) angeschlossen ist.

6. Kartusche nach Anspruch 4 oder 5, **dadurch gekennzeichnet, dass** der Koaleszenzfilter (17) in einem Einsatz (36) untergebracht ist.

7. Kartusche nach mindestens einem der Ansprüche 4 bis 6, **dadurch gekennzeichnet, dass** im Bereich des Koaleszenzfilters (17) ein weiteres Rückschlagventil (40) angeordnet ist, das eine Teildurchströmung des Koaleszenzfilters (17) bei der Regeneration verhindert.

## Claims

1. A method of cleaning compressed air to be used in a compressed air supply system of a motor vehicle by use of a replaceable cartridge, in which the compressed air of a compressor containing especially oil and water is directed through a pre-filter (15) in the replaceable cartridge, thereby removing larger particles and water from the compressed air in the pre-filter, and in which the compressed air is directed through a deposit chamber (23), the deposit chamber being filled with a treating substance (24) to take up humidity, **characterized in that** the compressed air coming from the compressor and being directed through the pre-filter (15) of the cartridge is directed though a coalescing filter (17) before directing the compressed air though the deposit chamber (23) of the cartridge, the deposit chamber being filled with the treating substance (24), the coalescing filter collecting at least oil from the compressed air in the coalescing filter to form larger particles and depositing the larger particles downstream of the coalescing filter (17), while during regeneration the larger particles collected and deposited downstream of the coalescing filter are transferred into the atmosphere by a flow of regeneration air at least partly bypassing the coalescing filter (17) and the larger particles deposited in the pre-filter (15) are transferred into the atmosphere by the flow of regeneration air and the larger particles collected and deposited downstream of the coalescing filter (17) are transferred into the atmosphere by the flow of regeneration air flowing through the pre-filter (15).

2. The method of claim 1, **characterized in that** the regeneration air flows through the coalescing filter (17) at a lower velocity than through the pre-filter (15).

3. The method of one of the claims 1 to 2, **characterized in that** the regeneration air and the larger particles collected and deposited downstream the coalescing filter (17) are directed through the pre-filter (15) at least partly through a check valve (30) being arranged parallel to the coalescing filter.

4. A replaceable cartridge (1) for cleaning compressed air to be used in compressed air supply systems of motor vehicles, including a housing (2) comprising a threaded connection (6) with at least one seal (10), a pre-filter (15) and a deposit chamber (23) being arranged in the housing, the deposit chamber being located downstream of the pre-filter and being filled with a treating substance (24), **characterized in that** a coalescing filter (17) is located between the pre-filter (15) and the deposit chamber (23), **in that** a bypass conduit (31) is provided, the bypass conduit being designed and arranged to bypass at least partly the coalescing filter (17) and not to bypass the pre-filter (15), and **in that** a check valve (30) is arranged in the bypass conduit (31) in a way that it opens during regeneration.

5. The cartridge of claim 4, **characterized in that** the coalescing filter (17) is arranged in the housing (2) at a substantially vertical orientation, the coalescing filter has an exit side, a collecting chamber (18) being located at the exit side and being designed and arranged to collect larger particles to be deposited, the collecting chamber being connected to the bypass conduit (31).

6. The cartridge of claim 4 or 5, **characterized in that** the coalescing filter (17) is arranged in an insert (36).

7. The cartridge of at least one of the claims 4 to 6, **characterized in that** a second check valve (40) is arranged in the region of the coalescing filter (17) and being designed and arranged to prevent a partial flow of compressed air from flowing through the coalescing filter (17) during regeneration of the cartridge.

## Revendications

1. Procédé d'épuration de l'air comprimé dans des systèmes de production d'air comprimé sur des véhicules automobiles dans une cartouche amovible, dans lequel l'air comprimé, acheminé à partir d'un compresseur et contenant, en particulier, de l'huile et de l'eau, est guidé dans la cartouche amovible tout d'abord à travers un préfiltre (15), et dans lequel sont séparées des particules plus grandes et l'eau, et est guidé à travers une chambre de séparation (23) pour l'humidité, contenant au moins un produit de traitement (24), **caractérisé en ce que** l'air comprimé acheminé à partir du compresseur et guidé dans la cartouche à travers le préfiltre (15), est guidé dans la cartouche à travers un filtre de coalescence (17) et, à cette occasion, au moins l'huile est regroupée en forme de particules plus grandes et est séparée en aval du filtre de coalescence (17), avant que l'air comprimé ne soit guidé à travers la chambre de séparation (23) de la cartouche, contenant le produit de traitement (24), tandis que, lors de la régénération, les particules plus grandes regroupées et séparées en aval du filtre de coalescence (17), contournant au moins en partie le filtre de coalescence (17), et les particules plus grandes séparées dans le préfiltre (15) sont transférées avec un flux d'air de régénération dans l'atmosphère, et les particules plus grandes regroupées et séparées en aval du filtre de coalescence (17) sont transférées avec le flux d'air de régénération dans l'atmosphère en passant par le préfiltre (15).

2. Procédé selon la revendication 1, **caractérisé en ce que** le filtre de coalescence (17) est traversé avec une vitesse plus faible que le préfiltre (15).

3. Procédé selon l'une quelconque des revendications 1 à 2, **caractérisé en ce que** le flux d'air de régénération et les particules plus grandes regroupées et séparées en aval du filtre de coalescence (17) sont acheminées vers le préfiltre (15) en passant au moins en partie par un clapet de non-retour (30), monté en parallèle avec le filtre de coalescence.

4. Cartouche (1) amovible destinée à l'épuration de l'air comprimé dans des systèmes de production d'air comprimé sur des véhicules automobiles, comportant un raccord fileté (6) et au moins un boîtier (2) muni d'une garniture d'étanchéité (ID), dans lequel est prévu un préfiltre (15) et, en aval de celui-ci par référence au sens d'écoulement, une chambre de séparation (23) contenant un produit de traitement (241. **caractérisée en ce qu'**un filtre de coalescence (17) est monté entre le pré filtre (15) et la chambre de séparation (23) contenant un produit de traitement (24), et **en ce qu'**il est prévu une conduite de contournement (31), contournant au moins en partie le filtre de coalescence (17), mais pas le pré filtre (15), et **en ce que** dans la conduite de contournement (31) est prévu un clapet de non-retour (30) qui s'ouvre lors de la régénération.

5. Cartouche selon la revendication 4, **caractérisée en ce que** le filtre de coalescence (17) est monté sensiblement verticalement dans le boîtier (2) et comporte, du côté sortie, un collecteur (18) pour les particules plus grandes à séparer, lequel est raccordé à la conduite de contournement (31).

6. Cartouche selon la revendication 4 ou 5, **caractérisée en ce que** le filtre de coalescence (17) est logé dans un insert (36).

7. Cartouche selon au moins l'une des revendications 4 à 6, **caractérisée en ce que** dans la zone du filtre de coalescence (17) est disposé un autre clapet de non-retour (40), qui empêche une circulation partielle à travers le filtre de coalescence (17) lors de la régénération.
